# FASCICULE DE BREVET EUROPEEN

(11) **EP 0 377 000 B1**
(45) Date de publication et mention de la délivrance du brevet: **10.03.1993**
(21) Numéro de dépôt: 89905388.8
(22) Date de dépôt: 11.05.1989
(51) Int. Cl.: B65G 53/28

(54) **INSTALLATION DE DOSAGE ET DE TRANSPORT A FLUX UNIDIRECTIONNEL**
DOSIER- UND FÖRDERVORRICHTUNG MIT EINWEG-STRÖMUNG
INSTALLATION FOR DOSING AND UNIDIRECTIONAL FLOW TRANSPORT

(30) Priorité: 16.05.1988 CH 1825/88
(43) Date de publication de la demande: 11.07.1990
(73) Titulaire: PAUX, Jean-Michel, CH-1606 Forel (CH)
(72) Inventeur: PAUX, Jean-Michel, CH-1606 Forel (CH)
(74) Mandataire: Moinas, Michel
(86) Numéro de dépôt international: CH8900086
(87) Numéro de publication internationale: WO8911431

(56) Documents cités:
- EP-A- 0 167 190
- FR-A- 2 306 916
- GB-A- 2 011 547

## Description

### DOMAINE TECHNIQUE.

La présente invention concerne une installation de dosage et de transport à flux unidirectionnel, notamment pour le dosage et le transport de matières telles que des poudres, granulés, paillettes, flocons, à partir de moyens de stockage.

### TECHNIQUE ANTERIEURE.

De nombreux produits, se présentant sous la forme de matières en poudres, granulés, paillettes, flocons ou même un mélange de ces différentes matières doivent, dans le cycle de fabrication d'un produit déterminé, être judicieusement dosés et ensuite transportés, en vue d'être traités ultérieurement. Les propriétés inhérentes à ces différentes matières, telles que le foisonnement et leur propension à se maintenir en suspension, rendent leur dosage et leur transport difficile.

Des solutions consistant à utiliser des dispositifs tels que boudin tournant dans un tube selon le principe de la vis d'Archimède, propulsion en suspension dans une canalisation par un courant d'air comprimé, pompe aspirante et foulante comportant un piston se déplaçant dans une chambre cylindrique équipée à sa partie inférieure d'un dispositif d'injection d'air comprimé destiné à assister le piston dans son travail de refoulement ont déjà été expérimentées. Le dernier dispositif mentionné est également muni de filtres placés sur les canalisations d'aspiration et de refoulement des matières à travailler.

Ces dispositifs présentent tous l'inconvénient de faire foisonner la matière à travailler. Dans le cas de la pompe aspirante et foulante, l'inconvénient réside dans le fait que la matière à travailler entre en contact avec les pièces mobiles du dispositif (piston, garnitures) ainsi qu'avec la jupe du cylindre dans lequel se déplace le piston, ce qui compromet à plus ou moins longue échéance, le bon fonctionnement de la poque. Une telle pompe aspirante et foulante a été décrite dans le brevet CH-652100.

L'installation décrite dans le brevet CH-656371 consiste quant à elle en une amélioration d'une pompe aspirante et foulante en lui associant un circuit d'air comprimé et des filtres sur les conduites d'aspiration et de refoulage.

Aucun de ces dispositifs n'évite cependant l'aspiration de la matière à travailler soit dans le cylindre même de la pompe soit dans une portion de canalisation, puis le refoulement de la quantité de matière accumulée dans le cylindre de la pompe ou dans la portion de canalisation.
Les dispositifs consistant à mettre le récipient de stockage en pression puis, par un dispositif de vannes et de doseurs, à constituer des portions de matière dans une canalisation et ensuite à les évacuer à l'aide d'air comprimé présentent, quant à eux, l'inconvénient de comprimer la matière se trouvant dans le récipient de stockage, ce qui, en fonction des caractéristiques de compressibilité des matières à travailler, provoque parfois un manque d'homogénéité de la portion de manière à évacuer ou parfois une compaction non désirée de ladite portion.

### EXPOSE DE L'INVENTION.

La présente invention se propose de pallier ces inconvénients en proposant une installation de dosage et de transport unidirectionnel des matières travaillées évitant leur foisonnement et leur compaction, tout en assurant un meilleur dosage des quantités de matière travaillée.
A cet effet, l'invention à pour objet une installation de dosage et de transport à flux unidirectionnel, notamment pour le dosage et le transport de matières en poudre, granulés, paillettes, flocons, comprenant des moyens d'aspiration et des moyens de pulsion reliés à des moyens de stockage desdites matières caractérisée en ce qu'elle comporte au moins une canalisation de transport et de dosage comprenant un conduit relié à une vanne amont séparée d'une vanne aval par une conduite, ladite vanne aval étant elle-même reliée à une canalisation d'évacuation, en ce que ladite canalisation de transport et de dosage est reliée aux moyens d'aspiration, constitués par une source de vide, par une crépine équipée d'un filtre, ladite crépine étant placée sur la conduite et connectée à ladite source de vide au travers d'une vanne à trois voies et d'une conduite, en ce que ladite canalisation de transport et de dosage est reliée auxdits moyens de pulsion, constitués par une source de pression, par un tube placé en aval de la vanne amont et par un tuyau placé en aval de la vanne aval, lesdits tube et tuyau étant connectés à une première vanne et à une seconde vanne reliées ensemble par un canal, ladite première vanne étant alimentée en fluide sous pression par un canal connecté à ladite source de pression, en ce que la source de pression est utilisée pour commander, au travers d'un distributeur et d'une vanne à trois voies, les vannes amont et aval et en ce que le fluide d'échappement de la vanne aval est utilisé pour le nettoyage du filtre en passant par un canal relié à la vanne à trois voies.

La présente invention propose aussi une installation de dosage et de transport comportant au moins deux canalisations de dosage et de transport placées en parallèle, reliées , à l'entrée des vannes amont, par un collecteur et reliées à la sortie des vannes aval par un collecteur de sortie débouchant dans une conduite d'évacuation.

La présente invention propose également une installation dans laquelle deux canalisations de dosage et de transport, placées en parallèle, sont reliées à l'entrée des vannes amont par un collecteur et à la sortie des vannes aval qui sont,quant à elles, reliées chacune, à une conduite d'évacuation séparée.

L'installation peut encore comporter deux canalisations de dosage et de transport placées en série l'une à la suite de l'autre.

L'installation selon l'invention se caractérise également par le fait que la crépine reliant la canalisation de dosage et de transport aux moyens d'aspiration peut indifféremment être placée tangentiellement ou circonférentiellement sur le diamètre extérieur de la conduite séparant la vanne amont de la vanne aval.

Un des avantages majeurs de cette installation réside dans le fait qu'elle permet un dosage précis de la quantité de matière désirée, cela en ne la déplaçant que dans un seul sens et sans qu'il soit nécessaire d'appliquer une surpression dans les récipients de stockage. d'autre part, elle autorise l'emploi d'un filtre ne se trouvant pas dans la section de passage de la matière à travailler. Selon une exécution préférée, plusieurs installations selon l'invention peuvent être groupées en série ou en parallèle de sorte que des matières provenant de stocks différents puissent être dosées puis acheminées vers un même endroit ou alors qu'une matière provenant d'un seul stock puisse être acheminée vers un seul ou plusieurs endroits.

### BRIEVE DESCRIPTION DES DESSINS.

Une forme d'exécution de l'installation sera décrite, à titre d'exemple, à l'aide du dessin annexé dans lequel :
La figure 1 est une représentation schématique d'une installation de dosage et de transport,
La figure 2 est une représentation schématique d'un premier groupement en parallèle de deux installations de dosage et de transport,
La figure 3 est une représentation schématique d'un second groupement en parallèle de deux installations de dosage et de transport et
La figure 4 est une représentation schématique du groupement en série de trois installations de dosage et de transport.

### MEILLEURES MANIERES DE REALISER L'INVENTION.

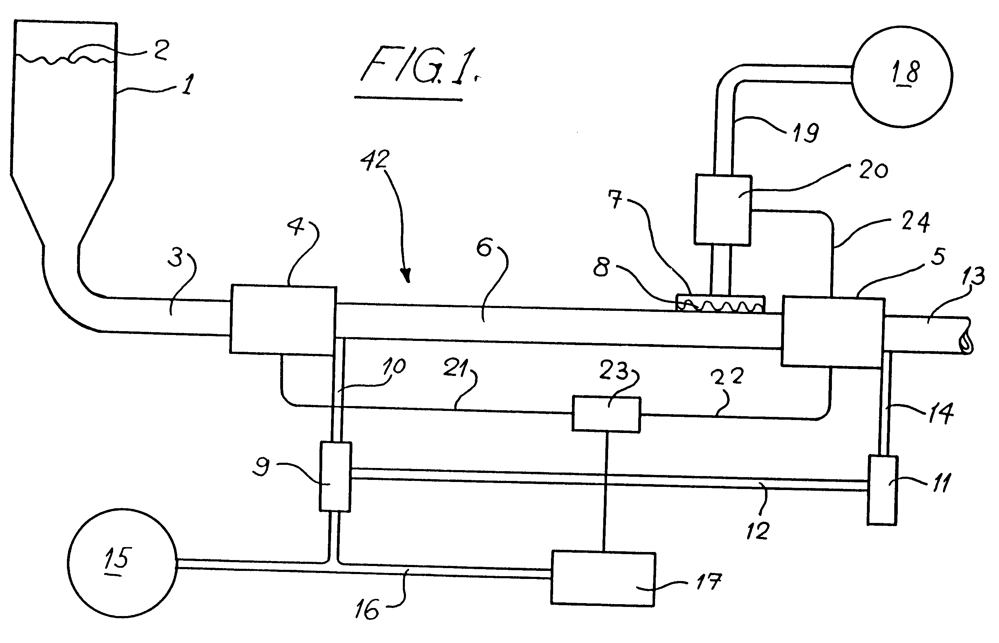

L'installation représentée à la figure 1 comprend un récipient de stockage 1 contenant la matière à travailler 2. Le récipient de stockage 1 est relié à une canalisation de transport et de dosage, constituée par un conduit 3 relié à une vanne amont 4, suivie d'une vanne aval 5 de laquelle elle est séparée par une conduite 6 munie d'une crépine 7 équipée d'un filtre 8. Dans l'exécution représentée sur la figure 1, la crépine 7 est placée tangentiellement à la conduite 6. On pourrait imaginer que cette crépine 7 soit placée circonférentiellement sur le diamètre extérieur de la conduite 6. La conduite 6 est aussi connectée à une vanne 9 à l'aide d'un tube 10 placé en aval de la vanne amont 4. La vanne 9 communique avec une autre vanne 11 par le truchement d'un canal 12. Cette vanne 11 est connectée à la canalisation d'évacuation 13 de la conduite 6 par un tuyau 14 placé lui aussi en aval de la vanne aval 5.

Les vannes 9 et 11 sont connectées à des moyens de pulsion, constitués par une source de pression 15, par un canal 16 équipé d'un distributeur 17. La crépine 7 est reliée à une source de vide 18 par une conduite 19 sur laquelle est montée une vanne à trois voies 20. L'alimentation en fluide de commande, par exemple de l'air comprimé ou de l'azote, des vannes amont 4 et aval 5 est réalisée à l'aide des tuyaux 21 et 22 connectés au distributeur 17 au travers d'une vanne à trois voies 23. De préférence, l'air d'échappement de la vanne amont 4 est mis à l'atmosphère alors que l'air d'échappement de la vanne aval 5 est quant à lui utilisé dans le canal 24, relié à la vanne trois voies 20, pour le nettoyage automatique du filtre 8 de la crépine 7.

Le fonctionement de l'installation décrite par la figure 1 est le suivant :
La vanne aval 5 et les vannes 9 et 11 étant fermées et la vanne amont 4 étant ouverte, la dépression produite par la source de vide 18 va aspirer, au travers du filtre 8 de la crépine 7, une certaine quantité de matière à travailler 2 au récipient de stockage 1 cela dans la portion de la conduite 6 située entre les vannes amont 4 et aval 5. Lorsque la quantité de matière désirée est atteinte, c'est à dire lorsque la portion de conduite située entre les vannes amont 4 et aval 5 sera remplie, la pompe à vide vera obligatoirement augmenter sa vitesse de rotation. Cette augmentation de la vitesse de rotation de la pompe à vide sera utilisée, par exemple, comme signal pour la fermeture de la vanne amont 4 en agissant sur le distributeur 17 et la vanne à trois voies 23. Ce signal servira aussi à commander l'ouverture de la vanne aval 5 par l'action de la vanne à trois voies 20 qui, coupant l'arrivée du vide, mettra celle-ci à l'échappement au travers du filtre 8 de la crépine 7. Simultanément, les vannes 9 et 11 seront ouvertes et l'air comprimé de la source de pulsion 15 chassera la quantité de matière à travailler 2, comprise dans la portion délimitée les vannes amont 4 et aval 5, dans la partie aval 13 de la conduite 6. Il est bien entendu qu'une temporisation est prévue pour l'ouverture des vannes 9 et 11, la vanne 11 s'ouvrant de ce fait après la vanne 9. Sous l'action de l'air comprimé, la quantité de matière à travailler 2 aura donc été évacuée et l'on pourra à nouveau, après avoir refermé la vanne aval 5, recommencer un nouveau cycle de remplissage de la portion comprise entre les vannes amont 4 et aval 5.

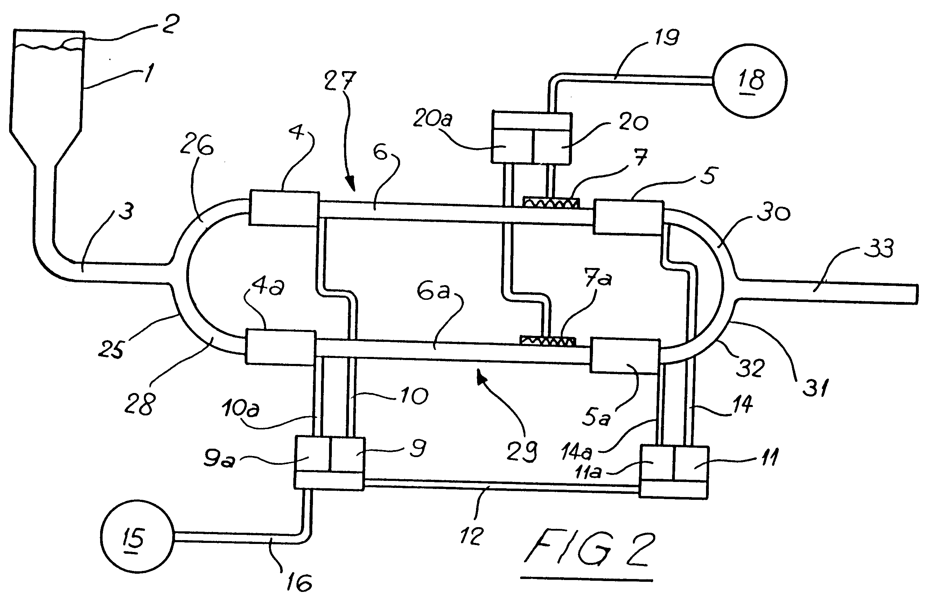

La figure 2 est une représentation schématique d'un premier groupement en parallèle de deux canalisations de dosage et de transport telles que celle décrite à la figure 1.

Cette configuration comporte un récipient de stockage 1 contenant de la matière à travailler 2 relié par un conduit 3 à un collecteur 25 dont la première branche 26 est connectée à la vanne amont 4 d'une première canalisation de dosage et de transport 27 en tous points semblable à celle de la figure 1. Les chiffres de référence utilisés sont par conséquent les mêmes. La seconde branche 28 du collecteur 25 est quant à elle reliée à la vanne amont 4a d'une seconde canalisation de dosage et de transport 29, elle aussi en tous points semblable à celle de la figure 1.

Afin de clarifier la figure, le circuit d'air comprimé de commande des vannes amont 4, 4a et aval 5, 5a n'a pas été représenté. De même, les chiffres de référence utilisés pour désigner les éléments constitutifs de la seconde canalisation de dosage et de transport 29 sont les mêmes que ceux utilisé pour la canalisation 27 auquels on a ajouté la référence "a". La vanne aval 5 de la canalisation 27 est reliée à la branche 30 d'un collecteur de sortie 31 et la vanne aval 5a de la canalisation 29 est reliée à la branche 32 de ce collecteur de sortie 31. Le collecteur de sortie 31 est de plus connecté à une conduite d'évacuation 33.

Le fonctionnement de l'installation décrite par la figure 2 est le suivant:
Dans un premier temps, la vanne aval 5, la vanne amont 4a et les vannes 9 et 11 sont fermées. On aspire donc, au moyen de la crépine 7 et de la vanne à trois voies 20, une quantité de matière à travailler 2 dans la portion de la conduite 6 située entre les vannes amont 4 et aval 5. La quantité de matière à travailler ayant été atteinte, la vanne amont 4 se fermera et simultanément, la vanne aval 5a ayant été fermée, la vanne amont 4a sera ouverte. De l'air comprimé sera introduit dans la conduite 6 et la matière à travailler sera expulsée dans le collecteur de sortie 31 qui pourra éventuellement être muni, à sa jonction avec la conduite d'évacuation 33, d'un clapet de dérivation (non représenté). Durant cette opération d'expulsion de la matière contenue dans la canalisation 27, l'autre canalisation 29 aura été remplie sous l'effet du vide passant par la vanne à trois voies 20a et la crépine 7a. Dès ce remplissage terminé, la vanne aval 5 sera à nouveau fermée et la vanne amont 4 ouverte et la matière en provenance du récipient de stockage 1 pourra à nouveau être pompée par la canalisation 27 alors que celle contenue dans la canalisation 29 pourra être expulsée sous l'action de l'air comprimé provenant de la source de pulsion 15 au travers des vannes 9a et 11a. Cette façon de faire permet donc, en morcelant plusieurs doses d'une même matière d'obtenir une précision plus grande de la quantité totale désirée. Elle permet en outre d'augmenter la vitesse de production de ce genre d'installations.

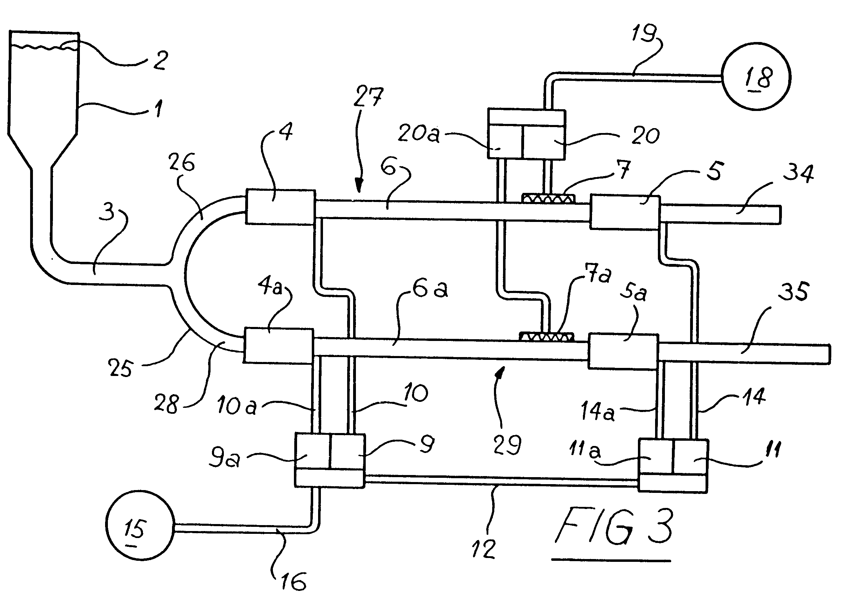

La figure 3 est une représentation schématique d'un second groupement en parallèle de deux canalisations de dosage et de transport telles que celle décrite à la figure 1. Cette configuration, similaire à celle de la figure 2 portera donc les mêmes signes de référence pour en désigner les éléments constitutifs. La différence principale existant entre l'installation de la figure 2 et celle décrite par la présente figure réside dans le fait que le collecteur de sortie 31 a été supprimé et remplacé d'une part par une conduite d'évacuation 34 placée à la suite de la vanne aval 5 de la canalisation 27 et d'autre part par une conduite d'évacuation 35 placée à la suite de la vanne aval 5a de la canalisation 29. Cette disposition permet un fonctionnement alternatif de chaque canalisation 27 respectivement 29, comme cela a été décrit en relation avec la figure 2 ou alors un fonctionnement simultané. Cette configuration est destinée à l'évacuation d'un même produit vers des destinations différentes.

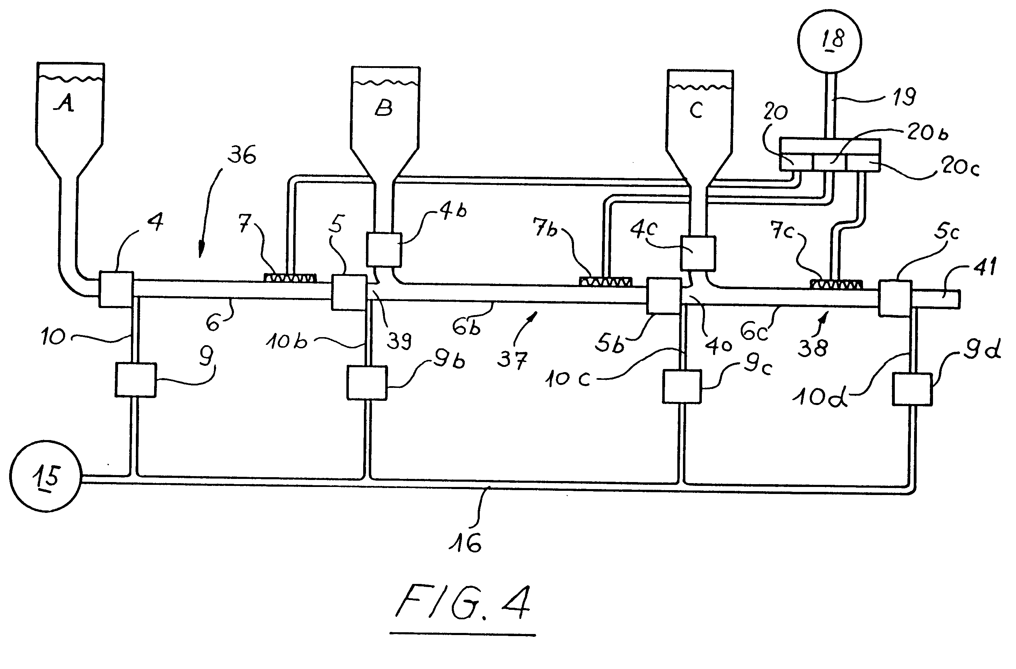

La figure 4 est une représentation schématique du groupement en série de trois canalisations de dosage et de transport du type décrit dans la figure 1. Dans cette configuration, les récipients de stockage A, B, respectivement C sont chacun reliés à des canalisations identiques 36, 37, respectivement 38. Ces canalisations sont semblables à celle décrite à l'aide de la figure 1 et porteront de ce fait les mêmes signes de référence auxquels seront ajoutées les lettres b, c et d afin de distinguer les éléments qui les constituent. Dans cette figure, la vanne amont 4 est montée à la sortie du récipient de stockage A de la canalisation 36. La vanne aval 5 de la canalisation 36 est reliée à la conduite 6b de la canalisation 37 par un manchon 39 situé en aval de la vanne amont 4b montée sur la sortie du récipient de stockage B. La vanne aval 5b de la canalisation 37 est reliée à la conduite 6cde la canalisation 38 par un manchon 40 situé en aval de la vanne amont 4c montée sur la sortie du récipient de stockage C. La vanne aval 5c de la canalisation 38 est quant à elle connectée au cannal de sortie 41. La source de vide 18 est connectée aux crépines 7, 7b, respectivement 7c des canalisations 36, 37 et 38 au travers des vannes à trois voies 20, 20b et 20c. La source de pulsion 15 agit sur les portions de conduites 6, 6b et 6c au travers des vannes 9, 9b, 9c et sur le canal de sortie 41, au travers de la vanne 9d.

Le fonctionnement de l'installation décrites par la figure 4 est le suivant:
Les vannes aval 5, 5b et 5c sont fermées ainsi que les vannes 9, 9b, 9c et 9d. On aspire simultanément dans chacune des canalisations 36, 37 et 38 la quantité de matière désirée. On ferme les vannes amont 4, 4b et 4c et on coupe l'aspiration à l'aide des vannes à trois voies 20, 20b et 20c. On ouvre la vanne aval 5c et les vannes 9c et 9d de façon à évacuer la matière contenue dans la canalisation 38. On ferme ensuite les vannes 9b et 9c de manière à évacuer la matière contenue dans la canalisation 37, cela au travers de la canalisation 38 restée libre. On ferme alors les vannes 9b et 9c et on ouvre la vanne aval 5 de la canalisation 36 ainsi que les vannes 9 et 9b. Cette action va provoquer l'évacuation de la matière contenue dans la canalisation 36 au travers des canalisations 37 et 38 restées ouvertes. Il est évident que l'on peut choisir, par exemple, de ne pas utiliser le produit contenu dns le récipient B, auquel cas, on fermera la vanne amont 4b et la vanne aval 5b lors du remplissage des canalisations 36 et 38 et que lors de l'évacuation, on ouvrira en temps voulu la vanne aval 5b.

L'installation selon l'invention autorise donc, de par sa conception, une utilisation multiple permettant de transporter successivement ou simultanément des matières, soit de stocks uniques ou différents vers des endroits uniques ou différents, tout en présentant l'avantage de pouvoir traiter des matières différentes en raison de l'évacuation complète de la matière contenue dans chaque installation. De plus, l'installation travaille de façon unidirectionnelle, ce qui permet de l'utiliser dans un grand nombre de configurations résultant des dosages et des mélanges à réaliser.

## Revendications

1. Installation de dosage et de transport à flux unidirectionnel,notamment pour le dosage et le transport de matières en poudre, granulés, paillettes, flocons, comprenant des moyens d'aspiration et des moyens de pulsion reliés à des moyens de stockage desdites matières, caractérisé en ce qu'elle comporte au moins une canalisation de dosage et de transport (42) comprenant un conduit (3) relié à une vanne amont (4) séparée d'une vanne aval (5) par une conduite (6), ladite vanne aval (5) étant elle-même reliée à une canalisation d'évacuation (13), en ce que ladite canalisation de dosage et de transport (42) est reliée aux moyens d'aspiration, constitués en une source de vide (18), par une crépine (7) équipée d'un filtre (8), ladite crépine (7) étant placée sur la conduite (6) et connectée à ladite source de vide (18) au travers d'une vanne à trois voies (20) et d'une conduite (19), en ce que ladite canalisation de dosage et de transport (42) est reliée auxdits moyens de pulsion, constitués par une source de pression (15), par un tube (10) placé en aval de la vanne amont (4) et par un tuyau (14) placé en aval de la vanne aval (5), lesdits tube (10) et tuyau (14) étant connectés à une première vanne (9) et à une seconde vanne (11) reliées ensemble par un canal ( 12), ladite première vanne (9) étant alimentée en fluide sous pression par un canal (16) connecté à ladite source de pression (15), en ce que la source de pression (15) est utilisée pour commander, au travers d'un distributeur (17) et d'une vanne à trois voies (23) les vannes amont (4) et aval (5) et en ce que le fluide d'échappement de la vanne aval (5) est utilisée pour le nettoyage du filtre (8) en passant par un canal (24) relié à la vanne à trois voies (20).

2. Installation de dosage et de transport selon la revendication 1 caractérisée en ce qu'elle comporte au moins deux canalisation de dosage et de transport (27, 29 ) placées en parallèle, reliées à l'entrée des vannes amont (4, 4a) par un collecteur (25) et reliées à la sortie des vannes aval (5, 5a) par un collecteur de sortie (31) débouchant dans une conduite d'évacuation ( 33).

3. Installation de dosage et de transport selon la revendication 1 caractérisée en ce qu'elle comporte deux canalisations de dosage et de transport (27, 29), placées en parallèle, reliées à l'entrée des vannes amont (4, 4a) par un collecteur (25) et en ce que les vannes aval (5, 5a) sont reliées respectivement à une conduite d'évacuation (34, 35) séparée.

4. Installation de dosage et de transport selon la revendication 1 caractérisée en ce qu'elle comporte au moins deux canalisations de dosage et de transport (36, 37) placées en série l'une à la suite de l'autre.

5. Installation de dosage et de transport selon la revendication 1 caractérisée en ce que la crépine (7) est placée tangentiellement par rapport au diamètre extérieur de la conduite (6).

6. Installation de dosage et de transport selon la revendication 5 caractérisée en ce que la crépine (7) est placée circonférentiellement sur le diamètre extérieur de la conduite (6).

## Patentansprüche

1. Dosier- und Fördervorrichtung mit Einweg-Strömung, insbesondere für die Dosierung und den Transport pulverförmiger, granulierter, schuppenförmiger, flockiger u. dgl. Materialien, welche Ansaug- und Antriebsmittel umfaßt, die mit Mitteln zur Lagerung dieser Materialien verbunden sind, dadurch gekennzeichnet, daß sie mindestens eine Dosier- und Förderleitung (42) aufweist, welche eine Leitung (3) umfaßt, die mit einem stromaufwärts gelegenen Ventil (4) verbunden ist, welches durch eine Leitung (6) von einem stromabwärts gelegenen Ventil (5) getrennt ist, welches seinerseits mit einer Auslaßleitung (13) verbunden ist, daß die Dosier- und Förderleitung (42) über einen mit einem Filter (8) ausgerüsteten Saugkopf (7) mit einer, eine Vakuumquelle (18) umfassenden Ansaugung verbunden ist, wobei der genannte Saugkopf (7) auf der Leitung (6) angebracht und über ein 3-Wege-Ventil (20) und eine Leitung (19) mit der genannten Vakuumquelle (18) verbunden ist, daß die genannte Dosier- und Förderleitung (42) mit den genannten Antriebsmitteln verbunden ist, die aus einer Druckquelle (15), einem stromabwärts des stromaufwärts gelegenen Ventils (4) angeordneten Rohr (10) und einem stromabwärts des stromabwärts gelegenen Ventils (5) angeordneten Rohr (14) bestehen, wobei das Rohr (10) und das Rohr (14) mit einem ersten Ventil (9) und mit einem zweitem Ventil (11) verbunden sind, welche untereinander durch einen Kanal (12) verbunden sind, wobei das genannte erste Ventil (9) mit Fluid unter Druck durch einen Kanal (16) gespeist wird, der an die genannte Druckquelle (15) angeschlossen ist, daß die Druckquelle (15) benutzt wird, um über einen Verteiler (17) und ein 3-Wege-Ventil (23) das stromaufwärts gelegene Ventil (4) und das stromabwärts gelegene Ventil (5) zu steuern, und daß das Austrittsfluid des stromabwärts gelegenen Ventils (5) zur Reinigung des Filters (8) verwendet wird, indem es einen mit dem 3-Wege-Ventil (20) verbundenen Kanal (24) passiert.

2. Dosier- und Fördervorrichtung nach dem Anspruch 1, dadurch gekennzeichnet, daß sie mindestens zwei Dosierund Förderleitungen (27, 29) enthält, die parallel angeordnet sind und die am Eingang der stromaufwärts gelegenen Ventile (4, 4a) durch ein Sammelrohr (25) und am Ausgang der stromabwärts gelegenen Ventile (5, 5a) durch ein in eine Auslaßleitung (33) mündendes Auslaßsammelrohr (31) verbunden sind.

3. Dosier- und Fördervorrichtung nach dem Anspruch 1, dadurch gekennzeichnet, daß sie zwei Dosier- und Förderleitungen (27, 29) enthält, die parallel angeordnet sind und die am Eingang der stromaufwärts gelegenen Ventile (4, 4a) durch ein Sammelrohr (25) verbunden sind und daß die stromabwärts gelegenen Ventile (5, 5a) mit einer separaten Auslaßleitung (34, 35) entsprechend verbunden sind.

4. Dosier- und Fördervorrichtung nach dem Anspruch 1, dadurch gekennzeichnet, daß sie mindestens zwei Dosierund Förderleitungen (36, 37) enthält, die in Folge, eine im Anschluß an die andere, angeordnet sind.

5. Dosier- und Fördervorrichtung nach dem Anspruch 1, dadurch gekennzeichnet, daß der Saugkopf (7) tangential in Bezug auf den Außendurchmesser der Leitung (6) angeordnet ist.

6. Dosier- und Fördervorrichtung nach dem Anspruch 5, dadurch gekennzeichnet, daß der Saugkopf (7) umfänglich auf dem Außendurchmesser der Leitung (6) angebracht ist.

## Claims

1. A dosing and transport installation with unidirectional flow, particularly for the dosing and transport of materials such as powders, grains, flakes or flocks, comprising aspiration means and pulsing means connected to storage means for said materials, characterized in that it includes at least one dosing and transport channel (42) comprising a duct (3) connected to an upstream valve (4) separated from a downstream valve (5) by a conduit (6), said downstream valve (5) being connected to an evacuation pipe (13); said dosing and transport channel (42) is connected to the aspiration means, comprising a vacuum source (18) and a screen (7) equipped with a filter (8), said screen (7) being placed on the conduit (6) and connected to said vacuum source (18) through a three-way valve (20) and a pipe (19); said dosing and transport channel (42) is connected to said pulsing means, consisting of a pressure source (15), of a tube (10) placed downstream of the upstream valve (4) and of a pipe (14) placed downstream of the downstream valve (5), said tube (10) and pipe (14) being connected to a first valve (9) and to a second valve (11) connected together by a pipe (12), said first valve (9) being supplied with fluid under pressure by a pipe (16) connected to said pressure source (15); said pressure source (15) is used to command, through a distributor (17) and a three-way valve (23), the upstream valve (4) and downstream valve (5); and fluid escaping from the downstream valve (5) is used to clean the filter (8) by passing through a pipe (24) connected to the three-way valve (20).

2. A dosing and transport installation according to claim 1 characterized in that it includes at least two dosing and transport channels (27,29) arranged in parallel, connected at the inlet of the upstream valves (4,4a) to a manifold (25), and connected at the outlet of the downstream valves (5,5a) to an output manifold (31) leading to an evacuation pipe (33).

3. A dosing and transport installation according to claim 1 characterized in that it includes two dosing and transport channels (27,29), arranged in parallel and connected at the inlet of the upstream valves (4,4a) to a manifold (25), and the downstream valves (5,5a) being each connected to a separate evacuation pipe (34,35).

4. A dosing and transport installation according to claim 1 characterized in that it includes at least two dosing and transport channels (36,37) arranged in series one after the other.

5. A dosing and transport installation according to claim 1 characterized in that the screen (7) is placed tangentially relative to the outer diameter of the conduit (6).

6. A dosing and transport installation according to claim 5 characterized in that the screen (7) is placed circumferentially on the outer diameter of the conduit (6).
